# EUROPEAN PATENT SPECIFICATION

(11) **EP 2 172 331 B1**
(45) Date of publication and mention of the grant of the patent: **02.04.2014**
(21) Application number: 09252129.3
(22) Date of filing: 03.09.2009
(51) Int. Cl.: B32B 7/02, B32B 27/36, G02B 1/10, B32B 38/04, C08J 7/04

(54) **Laminated film with hard coat**
Film mit harter Oberflächenbeschichtung
Film stratifié avec un revêtement dur

(30) Priority: 25.09.2008 JP 2008246029
(43) Date of publication of application: 07.04.2010
(73) Proprietor: FUJIFILM Corporation, Tokyo 106-8620 (JP)
(72) Inventor: Uchiumi, Kyouhisa, Kanagawa 250-0193 (JP)
(74) Representative: Stevens, Jason Paul

(56) References cited:
- JP-A- 2004 174 664
- US-B1- 6 489 015
- DATABASE WPI Week 200424 Thomson Scientific, London, GB; AN 2004-250605 XP002564470 & JP 2003 341006 A (FUJI FILM CORP) 3 December 2003 (2003-12-03)
- AGGARWAL S ET AL: "Three-dimensional finite element analysis of the magnetic tape slitting process" JOURNAL OF MATERIALS PROCESSING TECHNOLOGY, ELSEVIER, NL, vol. 170, no. 1-2, 14 December 2005 (2005-12-14), pages 71-88, XP025324329 ISSN: 0924-0136 [retrieved on 2005-12-14]

## Description

### BACKGROUND OF THE INVENTION

### Field of the Invention

The present invention relates to a laminated film, and particularly to a laminated film obtained by cutting a laminate comprising a long support and a hard thin film which is harder and thinner than the support and is provided on the support.

### Description of the Related Art

In various apparatuses, such as optical elements, displays such as liquid crystal displays and organic EL displays, semiconductor devices, and thin film solar cells, an optical film (such as a gas barrier film, a protective film, an optical filter, and an antireflective film) is used as a functional film (functional sheet). As one example of such a functional film, a functional film (laminated film) is known in which an organic film having a polymer as the main component is formed on a substrate, such as a plastic film, and an inorganic film of an inorganic substance is formed on the organic film as a hard thin film by a vacuum film manufacturing method.

In a film manufacturing apparatus which manufactures a laminated film, a cutting step in which a long film is cut in the longitudinal direction to a product width is performed. The cutting step is generally performed by passing a long film between a rotating lower blade and a rotating upper blade (for example, Japanese Patent Application Laid-Open No. 6-168444, Japanese Patent Application Laid-Open No. 8-279148, and Japanese Patent Application Laid-Open No. 9-153212).

However, in such cutting, when a film having a hard thin film, such as the above-described inorganic film, is cut, the hard thin film may crack. When the hard thin film cracks, problems that the quality of the product decreases, and that a cracked piece is reattached to the film surface, occur.

### SUMMARY OF THE INVENTION

The present invention has been made in view of such circumstances, and it is an object of at least the preferred embodiments of the present invention to provide a laminated film obtained by cutting a laminate without causing the cracking of the hard thin film.

In order to achieve the above object, the first aspect of the present invention is a laminated film obtained by cutting a laminate, said laminate comprising:
a long support, and
a hard thin film which is harder and thinner than the support and is provided on the support,
wherein the ratio of sag length B to sag amount A, B/A, on a surface on which the hard thin film is provided, when a cut end face is viewed in a direction perpendicular to the end face, is 5 or more.

The inventor of the present invention has found that the main cause of the occurrence of cracking of the hard thin film in the cutting step is that the support is greatly deformed during cutting, and the hard thin film cannot follow this deformation of the support. Therefore, the inventor of the present invention has found that the laminate should be cut so that the ratio of the sag length B to the sag amount A, B/A, on the surface on which the hard thin film is provided is 5 or more.

The present invention has been made based on such knowledge. According to the first aspect, in a laminated film obtained by cutting a laminate, said laminate comprising a long support, and a hard thin film which is harder and thinner than the support and is provided on the support, by cutting so that the ratio of the sag length B to the sag amount A, B/A, on a surface on which the hard thin film is provided, when a cut end face is viewed in the direction perpendicular to the end face, is 5 or more, a laminated film in which the cracking of the hard thin film is suppressed can be obtained.

Here, the sag amount A is the length of the inclined and deformed portion of the edge (end) in the film thickness direction, and the sag length B is the length of the inclined and deformed portion of the edge in the film width direction.

In the present invention, the ratio of the sag length B to the sag amount A, B/A, can be measured by a laser microscope (such as an OLS3000, manufactured by Olympus Corporation).

In a preferred form, the hard thin film comprises a laminate of a plurality of hard thin films.

In this preferred form, when a laminate of a plurality of hard thin films is provided, by the ratio of the sag length B to the sag amount A, B/A, on the surface on which the hard thin films are provided being 5 or more, a laminated film in which the cracking of the hard thin films is suppressed can be obtained.

In a further preferred form, the hard thin film is provided on both surfaces of the support.

In this form, when the hard thin film is provided on both surfaces of the support, by the ratio of the sag length B to the sag amount A, B/A, on the surface on which the hard thin film is provided being each 5 or more, a laminated film in which the cracking of the hard thin film is suppressed can be obtained.

In a further preferred form, the laminate has a buffer layer softer than the hard thin film as a layer under the hard thin film. By having a buffer layer under the hard thin film, a laminated film in which the cracking of the hard thin film is further suppressed can be obtained.

The present invention can provide a laminated film obtained by cutting a laminate having a hard thin film, such as an inorganic film, without causing the cracking of the hard thin film.

### BRIEF DESCRIPTION OF THE DRAWINGS

Fig. 1 is a conceptual view showing a laminate;
Fig. 2 is a perspective view schematically showing the configuration of a cutting apparatus for a laminate;
Fig. 3 is a front view showing the configuration of the cutting apparatus for a laminate; and
Fig. 4 is a front view showing a laminated film cut by the cutting apparatus.

### DETAILED DESCRIPTION OF THE PREFERRED EMBODIMENTS

A preferred embodiment of the laminated film of the present invention will be described below with reference to the accompanying drawings. First, a laminate suitable for cutting by a cutting apparatus, related to the laminated film of the present invention, will be described.

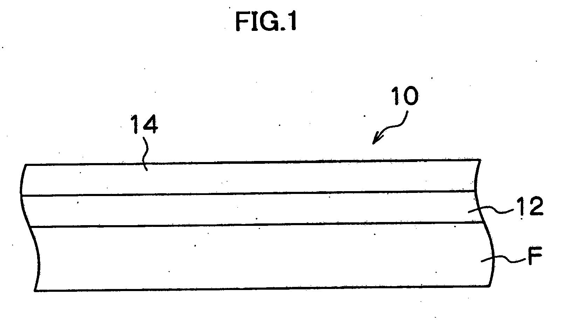

Fig. 1 is a conceptual view of a laminate. In the laminate 10 shown in Fig. 1, an organic film 12 having a predetermined polymer as the main component is formed on a surface of a substrate F (original film), and an inorganic film 14 is further formed on this organic film 12 by a vacuum film formation method.

The type of the substrate F is not particularly limited. Various substrates (base films) which are used for various functional films, such as a gas barrier film, an optical film, and a protective film, can all be used as long as the formation of the organic film 12 and the formation of the inorganic film 14 by vacuum film formation are possible.
Such various substrates include various resin films, such as a PET film, various metal sheets, such as an aluminum sheet, and the like. Also, the substrate F may be one having various films, such as a protective film and an adhesive film, formed on its surface.

The organic film 12 is, in this embodiment, a film having a radiation curable monomer or oligomer as the main component. Specifically, the monomer or oligomer used is preferably a monomer or oligomer which has two or more ethylenically unsaturated double bonds and is addition polymerized by light irradiation. Such a monomer and oligomer can include compounds which have at least one addition polymerizable, ethylenically unsaturated group in the molecule and have a boiling point of 100°C or more at atmospheric pressure. Examples of such compounds can include monofunctional acrylates and monofunctional methacrylates, such as polyethylene glycol mono(meth)acrylate, polypropylene glycol mono(meth)acrylate, and phenoxyethyl (meth)acrylate; polyethylene glycol di(meth)acrylate, polypropylene glycol di(meth)acrylate, trimethylolethane triacrylate, trimethylolpropane tri(meth)acrylate, trimethylolpropane diacrylate, neopentyl glycol di(meth)acrylate, pentaerythritol tetra(meth)acrylate, pentaerythritol tri(meth)acrylate, dipentaerythritol hexa(meth)acrylate, dipentaerythritol penta(meth)acrylate, hexanediol di(meth)acrylate, trimethylolpropane tri(acryloyloxypropyl) ether, tri(acryloyloxyethyl) isocyanurate, tri(acryloyloxyethyl) cyanurate, and glycerin tri(meth)acrylate; and polyfunctional acrylates and polyfunctional methacrylates, such as one obtained by adding ethylene oxide or propylene oxide to polyfunctional alcohol, such as trimethylolpropane and glycerin, and then performing (meth)acrylation.

Further, examples of such compounds can include urethane acrylates described in Japanese Examined Application Publication No. 48-41708, Japanese Examined Application Publication No. 50-6034, and Japanese Patent Application Laid-Open No. 51-37193; polyester acrylates described in Japanese Patent Application Laid-Open No. 48-64183, Japanese Examined Application Publication No. 49-43191, and Japanese Examined Application Publication No. 52-30490; and polyfunctional acrylates and methacrylates, such as epoxy acrylates which are reaction products of epoxy resin and (meth)acrylic acid.

Among these, trimethylolpropane tri(meth)acrylate, pentaerythritol tetra(meth)acrylate, dipentaerythritol hexa(meth)acrylate, and dipentaerythritol penta(meth)acrylate are preferred. Also, in addition to these, the preferred compounds can include "a polymerizable compound B" described in Japanese Patent Application Laid-Open No. 11-133600.

The photopolymerization initiator or photopolymerization initiator system used can include a vicinal polyketaldonyl compound disclosed in U. S. Patent No. 2367660, an acyloin ether compound described in U. S. Patent No. 2448828, an aromatic acyloin compound substituted with α-hydrocarbon described in U. S. Patent No. 2722512, a polynuclear quinone compound described in U. S. Patent No. 3046127 and U. S. Patent No. 2951758, a combination of a triarylimidazole dimer and p-aminoketone described in U. S. Patent No. 3549367, a benzothiazole compound and a trihalomethyl-s-triazine compound described in Japanese Examined Application Publication No. 51-48516, a trihalomethyl-triazine compound described in U. S. Patent No. 4239850, a trihalomethyloxadiazole compound described in U. S. Patent No. 4212976, and the like. Particularly, trihalomethyl-s-triazine, trihalomethyloxadiazole, and a triarylimidazole dimer are preferred.

Also, in addition to these, the preferred photopolymerization initiator or photopolymerization initiator system can include "a polymerization initiator C" described in Japanese Patent Application Laid-Open No. 11-133600. The amount of the photopolymerization initiator used is preferably 0.01 to 20% by mass of solids in a coating solution, and further preferably 0.5 to 10% by mass. Ultraviolet radiation is preferably used for light irradiation for the polymerization of a liquid crystalline compound. The irradiation energy is preferably 20 mJ/cm² to 50J/cm², and further preferably 100 to 2000 mJ/cm². Light irradiation may be carried out under heating conditions to promote photopolymerization reaction.

The method for forming the organic film 12 can include a usual solution coating method, or a vacuum film formation method and the like. For the solution coating method, coating can be performed by, for example, a dip coating method, an air knife coating method, a curtain coating method, a roller coating method, a wire bar coating method, a gravure coating method, a slide coating method, or an extrusion coating method using a hopper described in U. S. Patent No. 2681294. After coating, the coating solution is preferably dried by a heater, warm air, or the like, and then irradiated with UV (ultraviolet radiation) to polymerize the radiation curable monomer or oligomer.

Acrylate and methacrylate suffer polymerization inhibition due to oxygen in air. Therefore, in the present invention, when these are used as the organic film 12, the oxygen concentration or oxygen partial pressure during polymerization is preferably lowered. When the oxygen concentration during polymerization is decreased by a nitrogen substitution method, the oxygen concentration is preferably 2% or less, and more preferably 0.5% or less. When the oxygen partial pressure during polymerization is decreased by a pressure reduction method, the total pressure is preferably 1000 Pa or less, and more preferably 100 Pa or less. Also, it is particularly preferred to perform irradiation with an energy of 2 J/cm² or more under the condition of a reduced pressure of 100 Pa or less to perform ultraviolet polymerization.

In the present invention, the polymerization rate of the monomer is preferably 80% or more, more preferably 85% or more, and further preferably 90% or more. The polymerization rate herein means the ratio of reacting polymerizable groups to all polymerizable groups in the monomer mixture (for example, acryloyl groups and methacryloyl groups in the case of acrylate and methacrylate).

Also, the organic film 12 is preferably smooth and preferably has high film hardness. For the smoothness of the organic film 12, 10 µm square average roughness (Ra value) is preferably 10 nm or less, and more preferably 2 nm or less.

Further, the film hardness of the organic film 12 is preferably above a certain degree of hardness. For the preferred hardness, the indentation hardness as measured by a nanoindentation method is preferably 100 N/mm² or more, and more preferably 200 N/mm² or more. Also, the pencil hardness is preferably a hardness of HB or more, and more preferably a hardness of H or more.

The type of the inorganic film 14 is not particularly limited, and various inorganic substances can be used. Also, the method for manufacturing the inorganic film 14 is not particularly limited. However, film formation is preferably performed by a vacuum film formation method; and, for example, CVD, plasma CVD, sputtering, vacuum deposition, ion plating, and the like are used.

The hardness of the inorganic film 14 is preferably HRC 70 or more. In the inorganic film 14 having such hardness, cracking occurs easily during cutting, so that the effect of the present invention is remarkable. Also, the thickness of the inorganic film 14 is preferably 100 nm or less, and particularly preferably 50 nm or less. In such thin inorganic film 14, cracking occurs easily during cutting, so that the effect of the present invention is remarkable.

When the protective film of various devices and apparatuses, such as displays, for example, an organic EL display and liquid crystal display, is manufactured, a silicon oxide film or the like is formed as the inorganic film 14.

Also, when an optical film, such as an anti-light-reflective film, a light reflective film, and various filters, is manufactured, a film of a material having or exhibiting the desired optical properties is formed as the inorganic film 14.

In the laminated film of the present invention, the substrate of the laminate may have a sheet shape. The configuration of the laminate is not limited to three layers of the substrate F, the organic film 12, and the inorganic film 14, and may be two layers (the substrate F and the inorganic film 14). Also, the configuration of the laminate may be a configuration in which a plurality of organic films 12 is provided between the substrate F and the inorganic film 14. Further, the configuration of the laminate may be a configuration in which a plurality of laminated layers of the organic film 12 and the inorganic film 14 are provided.

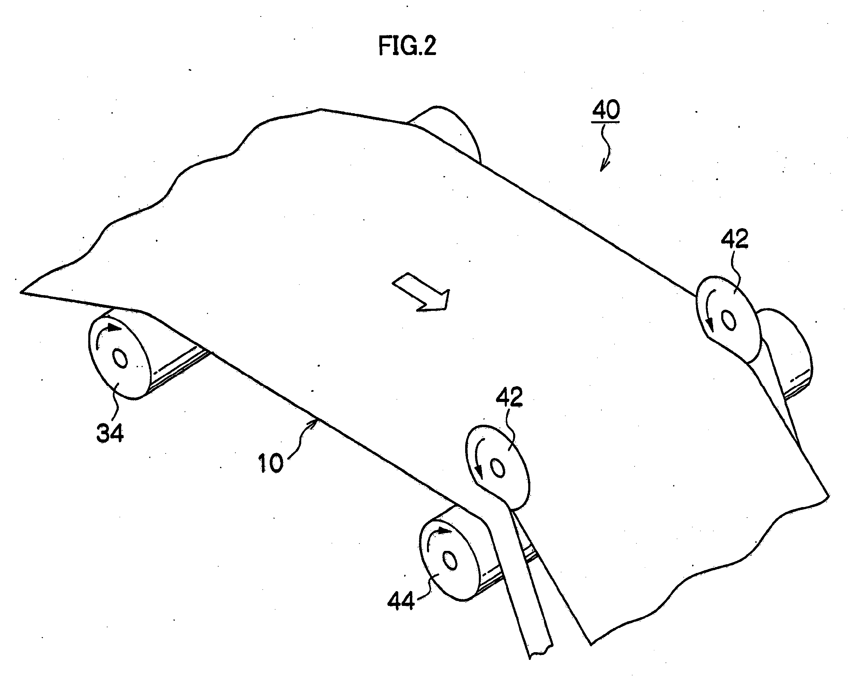

Fig. 2 is a perspective view schematically showing one example of a cutting apparatus 40 for a laminate. The cutting apparatus 40 shown in Fig. 2 is an apparatus which cuts the long laminate 10 to a specific product width to provide a laminated film 10'. The laminated film 10' is made to travel in the direction of the arrow in Fig. 2 by a traveling device, such as a feed roller 34, and the cutting apparatus 40 is located upstream in the traveling direction of the laminate 10.

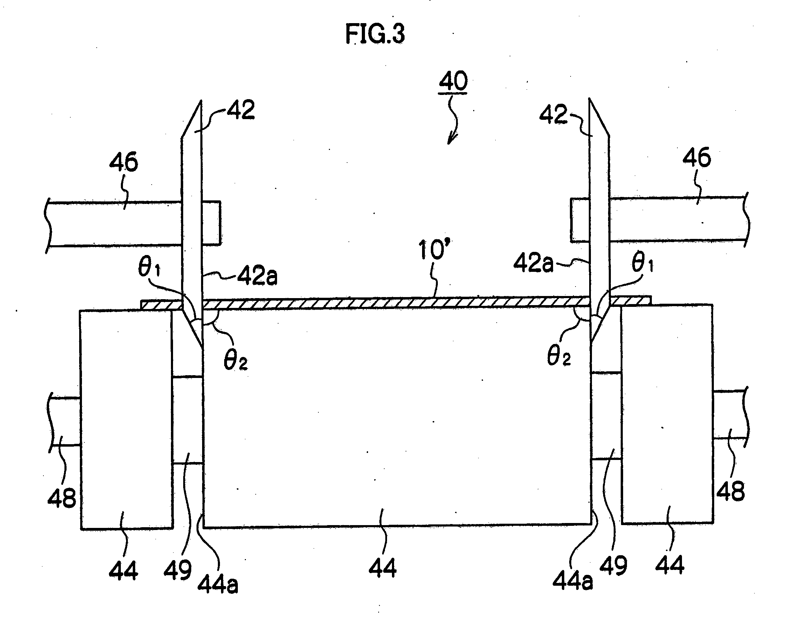

Fig. 3 is a front view showing the cutting apparatus 40 in Fig. 2. As shown in Fig. 3, the cutting apparatus 40 comprises a plurality of pairs of rotating upper blades 42 and rotating lower blades 44. For the material of the rotating upper blade 42 and the rotating lower blade 44, an SK material, an SUS material, and the like are used, and tungsten carbide and the like are also preferably used.

The rotating lower blade 44 is formed in a cylindrical shape and is rotatably supported by the apparatus body (not shown) via a shaft 48. Also, the rotating lower blade 44 is connected to a motor (not shown) via the shaft 48 and is driven by this motor to rotate. The rotation direction and peripheral speed of the rotating lower blade 44 are not particularly limited, but they are controlled so that the rotating lower blade 44 rotates, for example, in the same direction as the traveling direction of the laminate 10, and at peripheral speed equal to the traveling speed of the laminate 10.

The rotating lower blade 44 is divided into three, and a spacer 49 is disposed between the rotating lower blades 44. The width of the central rotating lower blade 44 of the three rotating lower blades 44 is the same as the product width, and both sides 44a of the central rotating lower blade 44 act as a circular cutting surface.

On the other hand, the rotating upper blade 42 is formed in a thin disk shape. This rotating upper blade 42 is rotatably supported by the apparatus body (not shown) via a shaft 46, and the shaft 46 is located parallel to the above-described shaft 48. The shaft 46 may be rotated together or may be driven by a motor not shown to rotate. The rotation direction and peripheral speed of the rotating upper blade 42 are not particularly limited, but they are set so that the rotating upper blade 42 rotates, for example, in the same direction as the traveling direction of the laminate 10, and at peripheral speed equal to the traveling speed of the laminate 10.

The rotating upper blade 42 is located so that its lower end enters between the rotating lower blades 44 (that is, overlaps as viewed from a side). The overlap amount is set to be, for example, about 0.5 mm when the rotating lower blade 44 has ϕ 10 to 12 inches (250 mm to 300 mm). In the rotating upper blade 42, a side 42a opposed to the side 44a of the rotating lower blade 44 act as a cutting surface.

In such cutting, when a laminate having a hard thin film, such as the above-described inorganic film, is cut, the hard thin film may crack. When the hard thin film cracks, problems that the quality of the product decreases, and that a cracked piece is attached to a surface of the cut laminated film occur.

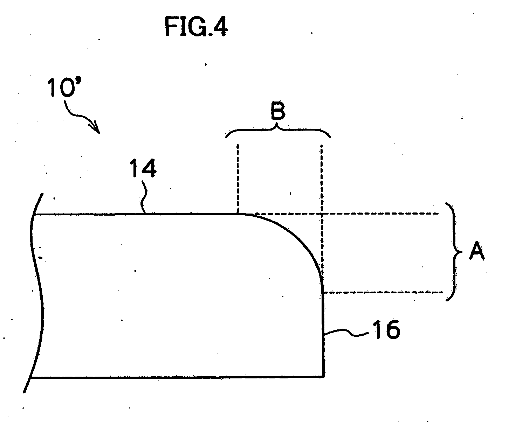

The inventor of this application has found that a laminated film in which the cracking of the hard thin film does not occur can be obtained by the ratio of the sag length B to the sag amount A, B/A, on the surface on which the hard thin film 14 is provided being 5 or more in the laminated film 10' shown in Fig. 4. Fig. 4 is a cross-sectional view of the end face 16 of the laminated film 10' obtained by cutting the laminate 10, as viewed in the direction perpendicular to the end face.

The inventor of the present invention has found that the main cause of the occurrence of cracking of the hard thin film in the cutting step is that the support is greatly deformed during cutting, and the hard thin film cannot follow this deformation of the support. Therefore, the inventor of the present invention has found that the laminate should be cut so that the ratio of the sag length B to the sag amount A, B/A, on the surface on which the hard thin film is provided is 5 or more.

By obtaining a laminated film so that the ratio of the sag length B to the sag amount A, B/A, on the surface on which the hard thin film is provided is 5 or more, in this manner, a laminated film in which the cracking of the hard thin film is suppressed can be obtained.

In the above embodiment, cutting in which the edge portions are cut off has been described as an example, but the ratio of the sag length B to the sag amount A, B/A, on the surface on which the hard thin film 14 is provided, in cutting to a predetermined length, also holds similarly.

In the embodiment, an example in which a laminate 10 comprising the substrate F, the organic film 12, and the inorganic film 14 is cut has been described, but the present invention also applies to the cutting of a laminate in which a plurality of inorganic films is provided, and the cutting of a laminate in which an inorganic film is provided on both surfaces of the substrate F. Also, the present invention applies to the cutting of a laminate in which a plurality of laminated layers of an organic film and an inorganic film are provided on the substrate F. In other words, by ensuring that the ratio of the sag length B to the sag amount A, B/A, on the surface on which the inorganic film (hard thin film) is provided being 5 or more, a laminated film in which the cracking of the hard thin film is suppressed can be obtained.

### Examples

Cutting was performed by the cutting apparatus 40 in Fig. 2 and Fig. 3 for laminates 10 in which the conditions of the material, thickness, and the like of the support (substrate), the buffer layer (organic film), and the hard thin film (inorganic film) were changed. The presence or absence of cracks in the hard thin film was evaluated for the cut laminated films 10' according to the following standard.
A: The cracking of the hard film is seen with the naked eye.
B: Cracking cannot be recognized with the naked eye, but is seen with an optical microscope (500x).
C: Cracking and detachment are not seen even with the optical microscope (500x).

The conditions and evaluation results of the laminated films are shown in Table 1.

For conditions other than those listed in Table 1, the thickness of the support was 70 µm, and for the laminates in which the buffer layer was provided (other than Example 4), the material of the buffer layer was DPHA (dipentaerythritol hexaacrylate), the hardness of the buffer layer was Hc 83, and the thickness of the buffer layer was 1.0 µm. In Table 1, PC means polycarbonate, and PET means polyethylene terephthalate.

For the conditions of the cutting apparatus, in Examples 1 to 4, the angle θ₁ of the rotating upper blade 42 was 30°, the angle θ₂ of the rotating lower blade 44 was 90°, the diameter of the rotating upper blade 42 was ϕ 150 mm, the diameter of the rotating lower blade 44 was ϕ 135 mm, the engagement amount was 0.25 mm, the conveyance speed of the laminate was 10 mm/minute, and the peripheral speed of the rotating upper blade 42 and the rotating lower blade 44 was 10 m/minute. In Comparative Examples 1 and 2, the conditions were the same as in Examples 1 to 4 except that the angle θ₁ of the rotating upper blade 42 was 90°.

The ratio of the sag length B to the sag amount A, B/A, in Table 1 was measured by a laser microscope (OLS3000, manufactured by Olympus Corporation).

**[Table 1]**

| | Hard thin film | | | Buffer layer | Support | Ratio of sag length to sag amount | Evaluation |
|---|---|---|---|---|---|---|---|
| | Type | Thickness (nm) | Hardness (Hc) | Presence or absence | Material | B/A | |
| Ex. 1 | TiN | 50 | 88 | Present | PET | 50 µm/5 µm = 10 | C |
| Ex. 2 | TiN | 150 | 87 | Present | PET | 25 µm/5 µm = 5 | C |
| Ex. 3 | TiN | 50 | 88 | Present | PC | 50 µm/2 µm = 25 | C |
| Ex. 4 | SiN | 50 | 86 | Absent | PET | 50 µm/5 µm = 10 | C |
| Com. Ex. 1 | TiN | 50 | 88 | Present | PET | 18 µm/5 µm = 3 | A |
| Com. Ex. 2 | TiN | 150 | 87 | Present | PET | 45 µm/12 µm = 4 | B |

As seen from Table 1, in Comparative Examples 1 and 2 in which the ratio of the sag length B to the sag amount A, B/A, on the surface on which the hard thin film is provided was 3 or 4, cracking was seen. In Examples 1 to 4 with a ratio B/A of 5, 10, or 25, cracking and detachment were not seen.

Therefore, it is found that by making the ratio of the sag length B to the sag amount A, B/A, on the surface on which the inorganic film (hard thin film) 5 or more, a laminated film in which the cracking of the hard thin film is suppressed can be obtained.

## Claims

1. A laminated film obtained by cutting a laminate (10) comprising a long support (F) and a hard thin film (14) formed by a vacuum film formation method which is harder and thinner than the support and is provided on the support, **characterized in that** the ratio of sag length B to sag amount A, B/A, on a surface on which the hard thin film (14) is provided, when a cut end face is viewed in a direction perpendicular to the end face, is 5 or more.

2. The laminated film according to claim 1, wherein the hard film has a thickness of less than or equal to 150 nm.

3. The laminated film according to claim 1 or claim 2, wherein the hard thin film comprises a laminate of a plurality of hard thin films.

4. The laminated film according to any of claims 1 to 3, wherein the hard thin film is provided on both surfaces of the support.

5. The laminated film according to any of claims 1 to 4, wherein the laminate comprises a buffer layer (12) softer than the hard thin film as a layer under the hard thin film.

## Patentansprüche

1. Laminierte Folie, die durch Schneiden eines Laminats (10) erhalten wird, das ein langes Substrat (F) und eine harte dünne Folie (14) umfasst, die mit einem Vakuumfolienherstellungsverfahren hergestellt wird und härter und dünner ist als das Substrat und auf dem Substrat angeordnet wird, **dadurch gekennzeichnet, dass** das Verhältnis B/A zwischen Durchhanglänge B und Durchhangbetrag A auf einer Oberfläche, auf der die harte dünne Folie (14) bereitgestellt wird, wenn eine geschnittene Endfläche in einer Richtung lotrecht zu der Endfläche betrachtet wird, 5 oder mehr beträgt.

2. Laminierte Folie nach Anspruch 1, wobei die harte Folie eine Dicke von gleich oder weniger als 150 nm hat.

3. Laminierte Folie nach Anspruch 1 oder Anspruch 2, wobei die harte dünne Folie ein Laminat aus mehreren harten dünnen Folien umfasst.

4. Laminierte Folie nach einem der Ansprüche 1 bis 3, wobei die harte dünne Folie auf beiden Oberflächen des Substrats bereitgestellt wird.

5. Laminierte Folie nach einem der Ansprüche 1 bis 4, wobei das Laminat eine Pufferschicht (12), die weicher ist als die harte dünne Folie, als eine Schicht unter der harten dünnen Folie umfasst.

## Revendications

1. Film stratifié obtenu en découpant un stratifié (10) comprenant un long support (F) et un film mince et dur (14) formé par un procédé de formation de film sous vide, lequel film est plus dur et plus mince que le support et est appliqué sur le support, **caractérisé en ce que** le rapport de la longueur de déflexion B au degré de déflexion A, B/A, sur une surface sur laquelle le film mince et dur (14) est appliqué, lorsqu'une face d'extrémité coupée est observée dans une direction perpendiculaire à la face d'extrémité, est de 5 ou plus.

2. Film stratifié selon la revendication 1, dans lequel le film dur a une épaisseur inférieure ou égale à 150 nm.

3. Film stratifié selon la revendication 1 ou la revendication 2, dans lequel le film mince et dur comprend un stratifié d'une pluralité de films minces et durs.

4. Film stratifié selon l'une quelconque des revendications 1 à 3, dans lequel le film mince et dur est appliqué sur les deux surfaces du support.

5. Film stratifié selon l'une quelconque des revendications 1 à 4, dans lequel le stratifié comprend une couche tampon (12) plus souple que le film mince et dur sous la forme d'une couche en dessous du film mince et dur.
